# EUROPEAN PATENT SPECIFICATION

(11) **EP 0 186 493 B1**
(45) Date of publication and mention of the grant of the patent: **31.03.1993**
(21) Application number: 85309414.2
(22) Date of filing: 23.12.1985
(51) Int. Cl.: C08L 83/04

(54) **Composite silicone rubber material**
Silikon-Gummiverbundwerkstoff
Composite de caoutchouc de silicone

(30) Priority: 28.12.1984 JP 277787/84
(43) Date of publication of application: 02.07.1986
(73) Proprietor: SUZUKI SOGYO KABUSHIKI KAISHA, Shimizu-shi Shizuoka-Ken (JP)
(72) Inventor: Nakanishi, Motoyasu, Fujishi Shizuokaken (JP)
(74) Representative: Skailes, Humphrey John

(56) References cited:
- DE-A- 3 100 746
- DE-A- 3 210 094
- DE-B- 2 036 720
- GB-A- 1 556 612
- US-A- 3 986 213
- Patent Abstracts of Japan, unexamined applications, C.Field, vol.7, no.143,June 22, 1983. The Patent Office Japanense Governement, page 153 C 172* Kokai-no.58-57 462(Nippon Oil Seal Kogyo K.K)*.

## Description

This invention relates to the use of a composite silicone rubber material as a shock absorbing material.

Special silicone rubber materials for such uses having a penetration of approximately 50 to 200 (measured in accordance with JIS K 2530 - 1976 - 50g load) are known.

Since this kind of silicone material has a pressure conductivity similar to a liquid, it disperses and distributes quickly and uniformly a locally applied external pressure such as a shock to the surrounding area and absorbs the pressure by non-resilient deformation. The material thus reduces repercussive effects.

Toray Silicone CY52 (brand name), which is manufactured by Toray Silicone Kabushiki Kaisha is an example of this kind of silicone material.

This silicone rubber material has excellent shock absorption properties but it is not very suitable for use in sports goods such as protectors for use on the human body as its specific gravity is high and it is expensive.

The present invention thus provides the use, as a shock absorbing material, of a composite silicone rubber material comprising a silicone rubber (having a penetration of 50 to 200 as measured in accordance with JIS K2530, 1976, using a 50g load) having cellular or hollow particulate resilient synthetic resin material included therein.

The cellular or hollow material may be in the form of hollow particles (such as "microspheres") or synthetic foam and generally has a particle size of 5-300 m·10⁻⁶. The particles are preferably uniformly distributed throughout the composite material. This material reduces the specific gravity and cost of the composite material.

The hollow or cellular material may be an organic synthetic resin-based cellular material such as Expancel (brand name, sold by Nippon Fillite Co., Ltd), for example in an amount of 1 to 4 weight %.

The silicone rubber used may for example be a liquid two-part room temperature-vulcanisable or polyaddition-type silicone, such as Toray Silicone CY52. The composite material may for example be produced by mixing the silicone-forming ingredients and the hollow or cellular material and hardening the mixture, preferably by heating.

The penetration herein shown is measured in accordance with JIS K 2530-1976 - (50g load). This standard relates to the petroleum asphalt penetration testing method wherein samples with penetration of 350 or less are tested with a load of 100g and rubber materials are tested with a load of 50g.

The following examples illustrate the invention:-

### Example 1

Expancel DE (brand name) having a specific gravity of 0.04 and costing ¥7,000/kg was mixed with silicone rubber basic material with a specific gravity of 0.98, and the results as shown in Table 1 were obtained.

The price percentages are obtained by relating the price of the material containing both the silicone and Expancel to the price of the silicone material itself.

**Table 1**

| Expancel (Weight %) | Specific gravity of composition | Price % |
|---|---|---|
| 0.5 | 0.98 | 0.91 |
| 1.0 | 0.81 | 0.82 |
| 1.4 | 0.75 | 0.76 |
| 1.5 | 0.74 | 0.75 |
| 2.0 | 0.68 | 0.69 |
| 3.0 | 0.58 | 0.62 |
| 4.0 | 0.51 | 0.53 |

The silicone material used in the above examples is made up by mixing the component liquids of Toray Silicone CY52, adding hollow or cellular material to the mixture and heating the mixture.

These examples show that it is preferable to use resilient hollow cells such as Expancel in an amount of approximately 1.5 to 4.0% for use as a shock absorbing material.

In other words, resilient hollow cells are capable of increasing the shock absorbing effect and improving the recoverability of the composite material since they can add a resisting force (on account of elastic deformation) to the shock absorbing effect deriving from the non-elastic deformation of the silicone material.

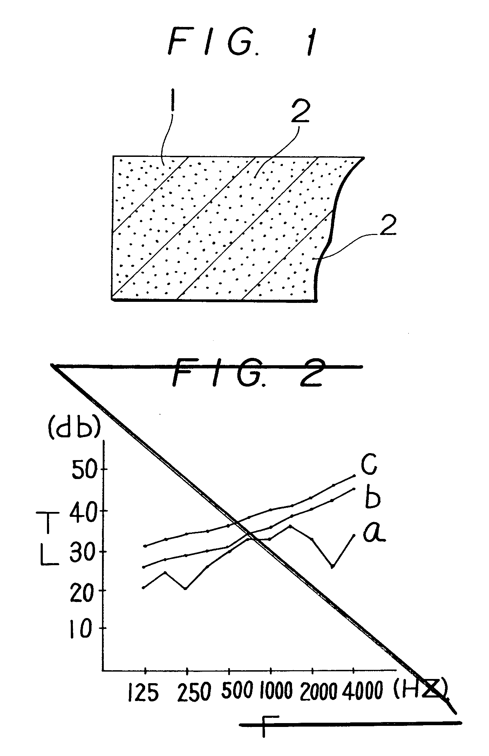

As shown in cross-section in Figure 1, the composite material of the invention contains number of fine hollow or cellular particles 2 in a silicone rubber 1, in much the same way as if the composition contained a number of bubbles.

Furthermore it has been shown that the composite material of the invention can provide remarkable shock absorption as compared to Ensolite (brand name for a foamed polyethylene-based shock absorbing material manufactured by Uniroyal Corporation in the United States), and silicone rubber material only, as shown with the results of the dropping steel ball shock test in Table 2 below. In this test, a 510g steel ball was dropped from the height of 69cm onto a shock absorbing material placed on the steel table and the shock conducted to the table was detected and measured by a pickup on the underside of the table.

In this test, the impact speed of the steel ball as 3.68m/s and the momentum was 1.88kg m/s. A recording oscilloscope which was manufactured by Kikusui Denshi Kogyo K.K. was used to measure the maximum impact force and T 1/2.

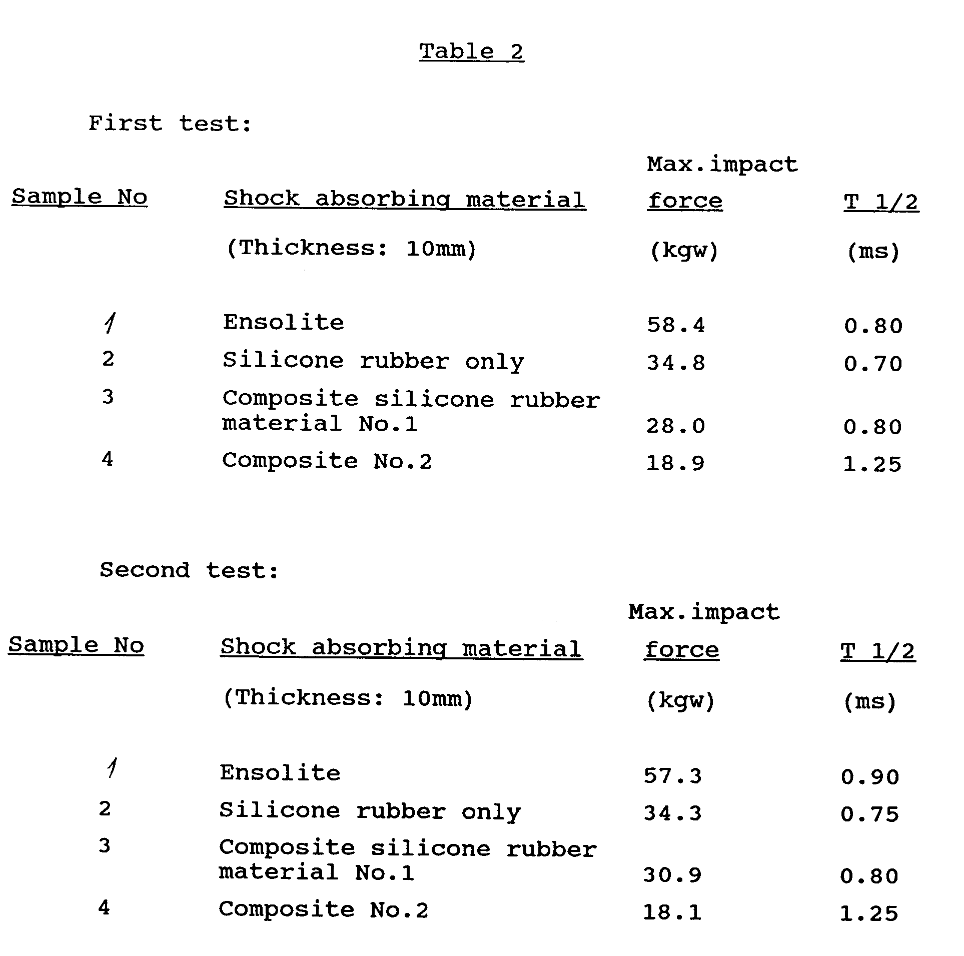

In Table 2, the silicone rubber material (sample No.2) has a penetration of 150. The composite material No.1 in (sample No.3) according to the invention is made by mixing the components for a silicone rubber having a penetration of 150 with 1.4 weight % Expancel DE. Composite No.2 (sample No.4) according to the invention is made by mixing the components for a silicone rubber having a penetration of 150 with 3.0% Expancel DE.

## Claims

1. The use, as a shock absorbing material, of a composite silicone rubber material, comprising a silicone rubber (having a penetration of 50 to 200 as measured in accordance with JIS K2530, 1976, using a 50g load) having cellular or hollow particulate resilient synthetic resin material included therein to increase the shock absorbing effect.

2. A use according to claim 1 in which the cellular or hollow material has a particle size of 5-300 m·10⁻⁶.

3. A use according to claim 1 or 2 in which the composite material contains 1-4 weight % synthetic resin foam particles.

4. A use according to any preceding claim in which the composite material is in sheet form.

## Patentansprüche

1. Verwendung eines Silikonkautschukverbundmaterials als Stoßdämpferwerkstoff, bestehend aus einem Silikonkautschuk (mit einer Eindringtiefe von 50 bis 200 wie gemäß JIS K2530, 1976, mit 50 g Belastung gemessen) mit darin zur Erhöhung der stoßdämpfenden Wirkung eingebautem zellenförmigen oder hohlen teilchenförmigen elastischen Kunstharzmaterial.

2. Verwendung nach Anspruch 1, wobei das zellenförmige oder hohle Material eine Teilchengröße von 5-300 m·10⁻⁶ aufweist.

3. Verwendung nach Anspruch 1 oder 2, wobei das Verbundmaterial 1-4 Gew.-% Kunstharzschaumteilchen enthält.

4. Verwendung nach einem der vorhergehenden Ansprüche, wobei das Verbundmaterial in Folienform vorliegt.

## Revendications

1. L'utilisation, en tant que matériau absorbeur de chocs, d'un matériau composite caoutchouc silicone, comprenant du caoutchouc silicone (ayant un indice de pénétration de 50 à 200, mesuré selon JIS K2530, 1976, en utilisant une charge de 50 g), ayant inclus en son sein un matériau de résine synthétique élastique alvéolaire ou creux sous forme de particules afin d'auganter l'effet d'absorption de chocs.

2. Une utilisation selon la revendication 1, dans laquelle le matériau alvéolaire ou creux a une taille de particules de 5-300×10⁻⁶m.

3. Une utilisation selon la revendication 1 ou 2, dans laquelle le matériau composite contient 1 à 4% en poids de particules de mousse de résine synthétique.

4. Une utilisation selon l'une quelconque des revendications précédentes, dans laquelle le matériau composite est sous la forme d'une feuille.
